# EUROPÄISCHE PATENTSCHRIFT

(11) **EP 3 964 374 B1**
(45) Veröffentlichungstag und Bekanntmachung des Hinweises auf die Patenterteilung: **03.09.2025**
(21) Anmeldenummer: 21183388.4
(22) Anmeldetag: 02.07.2021
(51) Int. Cl.: B29C 49/04, B29L 23/00, F16L 9/19, B60H 1/00, F28F 1/02, F16L 41/04, F16L 39/00, B29C 49/20, B29C 49/00, F28D 7/10, F28D 7/14, F28D 7/00, F28D 21/00

(54) **ROHRANORDNUNG FÜR DEN TRANSPORT VON TEMPERIERMEDIEN**
TUBE ASSEMBLY FOR TRANSPORTING TEMPERATURE CONTROL MEDIA
AGENCEMENT DE TUBE POUR LE TRANSPORT DES MILIEUX DE MISE À LA TEMPÉRATURE

(30) Priorität: 03.09.2020 EP 20194403
(43) Veröffentlichungstag der Anmeldung: 09.03.2022
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Aucouturier, Mathieu, 67300 Schiltigheim (FR)
(74) Vertreter: Novagraaf Group

(56) Entgegenhaltungen:
- EP-A1- 3 098 100
- EP-A2- 0 786 363
- EP-A2- 1 189 010
- WO-A1-2004/041565
- DE-A1- 102012 201 923
- DE-A1- 102014 218 935
- JP-A- 2005 335 628
- JP-A- H0 269 218

## Beschreibung

Die Erfindung betrifft eine Rohranordnung für den Transport von Temperiermedien, umfassend einen mittels Blasformen hergestellten Grundkörper, aus welchem zumindest ein erster Kanal und ein zweiter Kanal ausgebildet ist.

Temperiermedien werden beispielsweise in der Elektromobilität benötigt. Akkumulatoren von Elektrofahrzeugen, insbesondere Lithium-Ionen-Akkumulatoren, weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welchen Temperiermedien zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren, insbesondere zu kühlen. Hierzu gehören neben dem Akkumulator die Leistungselektronik und der Elektromotor. Die Ladeelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern. Ist ein Fahrzeug zum autonomen Fahren ausgerüstet, werden leistungsfähige Sensoren und leistungsfähige Rechner benötigt, wobei die Systeme redundant vorhanden sind. Dadurch, dass der Bauraum in einem Fahrzeug beschränkt ist, ergeben sich auch bei diesen Systemen besondere Anforderungen an eine Temperiereinrichtung zur Temperierung dieser Komponenten.

Temperiermedien kommen ferner in Klimaanlagen zum Einsatz. Klimaanlagen, insbesondere mobile Klimaanlagen, umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Kraftfahrzeugen, ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyceln.

In allen Anwendungen besteht häufig die Anforderung, dass die Rohranordnung besonders kompakt sein soll. Dabei kann es vorkommen, dass über die Kanäle Aggregate mit Medium versorgt werden sollen, welche räumlich verschieden angeordnet sein können, wobei sich die Notwendigkeit einer gekreuzten, mit erhöhtem Bauraumbedarf einhergehende, Leitungsführung ergeben kann. Dementsprechend kann sich durch gekreuzte Leitungsführung eine voluminöse Rohranordnung mit erhöhtem Bauraumbedarf ergeben.

In der EP 1 189 010 A2 ist ein Wärmetauscher gezeigt, bei dem Kanäle jeweils separat Grundkörpern zugeordnet ist, wobei die Grundkörper zur Herstellung des Wärmetauschers miteinander verbunden werden.

Aus der EP 0 786 363 A2 ist eine Rohranordnung mit einem lufteintrittsseitigen Anschlussstück und zwei Fondseitenkanälen mit jeweils einer Luftauslassöffnung.

Der Erfindung liegt die Aufgabe zugrunde, eine Rohranordnung bereitzustellen, welche einen besonders geringen Bauraumbedarf aufweist.

Diese Aufgabe wird mit den Merkmalen von Anspruch 1 gelöst. Auf vorteilhafte Ausgestaltungen nehmen die Unteransprüche Bezug.

Die erfindungsgemäße Rohranordnung für den Transport von Temperiermedien umfasst einen mittels Blasformen hergestellten Grundkörper, aus welchem zumindest ein erster Kanal und ein zweiter Kanal ausgebildet sind, wobei der erste Kanal den zweiten Kanal zumindest abschnittsweise durchdringt.

Dabei ist insbesondere auch denkbar, dass die Kanäle bei dieser Rohranordnung in einem ersten Abschnitt zueinander eine erste Orientierung und in einem zweiten Abschnitt zueinander eine zweite Orientierung aufweisen, wobei sich die erste Orientierung von der zweiten Orientierung unterscheidet. Hierzu kann der erste Kanal zumindest abschnittsweise innerhalb des zweiten Kanals geführt sein.

Durch die Durchdringung ist es einerseits möglich, noch weitergehend Bauraum einzusparen und Bauraumabschnitte mit besonders geringem Bauraum passieren zu können. Des Weiteren ist vorteilhaft, dass die Rohranordnung in dem Bereich, in welchem ein Kanal innerhalb des zweiten Kanals geführt ist, besonders kompakt und platzsparend ist und eine robuste äußere Oberfläche aufweist. Darüber hinaus ist es denkbar, dass die Kanäle interagieren und beispielsweise in thermischem Austausch gebracht werden.

Die erfindungsgemäße Rohranordnung besteht aus einem mittels Blasformen hergestellten Grundkörper. Durch das Blasformen ist es möglich, einen Grundkörper mit einer komplexen Gestalt herzustellen. Dabei sind die Kanäle vorzugsweise materialeinheitlich und einstückig aus dem Grundkörper ausgebildet. Als Material für die Rohranordnung kommen vorzugsweise Kunststoffe wie thermoplastische Polymere, thermoplastische Elastomere zum Einsatz. In Abhängigkeit der Druckverhältnisse in den in der Rohranordnung transportierten Medien kann die Rohranordnung einschichtig, aber auch mehrschichtig ausgebildet sein.

Der Grundkörper kann mehrere Kanäle umfassen, welche in der für den Montageort erforderlichen Gestalt geformt, beispielsweise gekrümmt, sein können. Des Weiteren besteht eine große Freiheit in der Wahl der Querschnittsform des Kanals.

Eine weitere Verbesserung der Bauraumausnutzung ergibt sich, wenn der Querschnitt der Kanäle an den zur Verfügung stehenden Bauraum angepasst ist. Beispielsweise können die Kanäle in einem ersten Abschnitt im Querschnitt betrachtet kreisförmig und in einem zweiten Abschnitt oval oder rechteckig ausgebildet sein.

Die Orientierung der Kanäle kann in einem dritten Abschnitt und/oder in einem vierten Abschnitt wechseln. Hierzu können die Kanäle in dem dritten Abschnitt und/oder dem vierten Abschnitt bogenförmig ausgebildet sein. Durch die bogenförmige Führung ergibt sich ein besonders geringer Druckverlust. Ist der Bauraum sehr begrenzt, können die Kanäle in dem dritten und/oder vierten Abschnitt aber auch eine eckige Umlenkung aufweisen.

Es ist auch denkbar, dass sich der erste Kanal und der zweite Kanal zumindest in einem Abschnitt überkreuzen. Derartige Kreuzungsabschnitte erfordern üblicherweise besonders viel Bauraum. Des Weiteren ist der Montageaufwand besonders groß, wenn der Kreuzungsabschnitt aus einzelnen Rohren ausgebildet ist. Bei der erfindungsgemäßen Ausgestaltung ist der Abschnitt mit den sich kreuzenden Kanälen im Blasformverfahren aus dem Grundkörper ausgebildet. Dadurch ist es möglich, die Rohranordnung besonders kostengünstig herzustellen und darüber hinaus ist es möglich, dem Kreuzungsabschnitt eine platzsparende Geometrie zu verleihen.

Der erste Kanal und der zweite Kanal können unter einem Winkel zueinander verlaufen. Bei dieser Ausgestaltung kann die Rohranordnung ein Kreuzungsstück bilden. Beispielsweise ist es denkbar, dass die Kanäle unter einem Winkel von 90° zueinander verlaufen und sich in einem Kreuzungspunkt überschneiden.

Es ist auch denkbar, dass der erste Kanal und der zweite Kanal in zumindest einem Abschnitt parallel verlaufen. In diesem Bereich weist die Rohranordnung einen besonders geringen Bauraumbedarf auf.

Zumindest ein Kanalabschnitt zumindest eines Kanals kann als Einleger ausgebildet sein. Dabei können ein oder mehrere Einleger vorgesehen sein. Einleger sind Bauelemente, welche separat zu dem Grundkörper ausgebildet sind. Einleger werden vor dem Blasformvorgang in die Blasform eingebracht und während des Blasformens an den Grundkörper angeformt. Dadurch ist es möglich, Kreuzungsabschnitte innerhalb des Grundkörpers zu realisieren, wobei die Kanäle voneinander getrennt bleiben, so dass keine Durchmischung von Fluiden erfolgt.

Prinzipiell ist dabei denkbar, dass mehrere einander überkreuzende Kanäle vorgesehen sind. Beispielsweise können zwei parallel zueinander verlaufende Kanäle einen dritten Kanal oder zwei weitere parallel zueinander verlaufende Kanäle überkreuzen.

Vorzugsweise sind der erste Kanal und der zweite Kanal in dem Abschnitt bogenförmig geführt. Dadurch können abrupte Richtungswechsel vermieden werden, was den Strömungswiderstand des in den Kanälen geführten Mediums reduziert.

Der erste Kanal und der zweite Kanal können in dem Abschnitt in Form eines S-Bogens geführt sein. Bei dieser Ausgestaltung ergibt sich ein besonders geringer Strömungswiderstand. Der erste Kanal und der zweite Kanal können in dem Abschnitt einen Querschnitt aufweisen, der sich von den übrigen Querschnitten der Rohranordnung unterscheidet. Beispielsweise kann der Querschnitt der Kanäle in dem Abschnitt so gewählt werden, dass sich in diesem Bereich eine besonders platzsparende Geometrie der beiden Kanäle ergibt. Es ist aber auch denkbar, dass die Ausgestaltung der Kanäle in dem Abschnitt strömungsoptimiert ist, so dass die Kanäle in diesem Bereich einen besonders geringen Strömungswiderstand aufweisen.

Vorzugsweise sind der erste Kanal und der zweite Kanal in dem Abschnitt abgeflacht. Dabei können der erste Kanal und der zweite Kanal an zwei einander gegenüberliegenden Seiten abgeflacht sein. Alternativ ist auch denkbar, dass die beiden Kanäle im Abschnitt, im Querschnitt betrachtet, im Wesentlichen rechteckig ausgebildet sind. Dadurch ist es möglich, dass die Rohranordnung auch im Abschnitt besonders platzsparend ausgebildet ist und dass insgesamt eine bauraumsparende oder sogar bauraumneutrale Rohranordnung ausgebildet werden kann, bei der sich Kanäle überkreuzen. Neben der runden, abgeflachten oder rechteckigen Ausgestaltung sind auch ovalierte Formgebungen denkbar. Des Weiteren ist denkbar, dass die Kanäle abschnittweise konkav oder konvex ausgebildet sind. Dabei können der erste Kanal und der zweite Kanal in den einander zugewandten Wandabschnitten kongruent ausgeformt sein. Dazu kann beispielsweise der erste Kanal in dem zugewandten Wandabschnitt konkav ausgeformt sein und der zweite Kanal in dem entsprechenden Wandabschnitt konvex. Ebenso ist denkbar, dass der erste Kanal und der zweite Kanal jeweils voneinander unterscheidende Querschnitte aufweisen.

Der erste Kanal und der zweite Kanal können zumindest abschnittsweise miteinander verbunden sein. Dabei kann die Verbindung materialeinheitlich und einstückig erfolgen und beispielsweise durch einen an die Kanäle angeformten Steg realisiert sein. Der Steg kann durchgehend oder abschnittsweise ausgebildet sein. Alternativ können sich die Kanäle auch abschnittsweise anliegend berühren und in den Berührungsabschnitten stoffschlüssig miteinander verbunden sein. Bei beiden Ausgestaltungen ist die Rohranordnung besonders kompakt und die Kanäle sind verliersicher miteinander verbunden.

In dem Kanalabschnitt können zwischen den Kanälen Durchbrechungen ausgebildet sein, wobei ein oder mehrere Kanäle durch die Durchbrechungen hindurchgeführt sind. Dadurch ist die Führung der Kanäle und die Ausgestaltung des Kreuzungsbereichs besonders flexibel und es können besonders einfach Orientierungsänderungen der Kanäle realisiert werden.

Der erste Kanal und der zweite Kanal können strömungsleitend miteinander verbunden sein. Bei dieser Ausgestaltung kann Medium von einem Kanal in den anderen Kanal überströmen. In diesem Zusammenhang ist es insbesondere denkbar, dass in der Verbindung zwischen dem ersten Kanal und dem zweiten Kanal ein Ventil, insbesondere ein schaltbares Ventil angeordnet ist. Des Weiteren ist denkbar, dass in der Verbindung eine Drossel angeordnet ist. Die Verbindung kann als weiterer Kanal ausgebildet sein. Der weitere Kanal kann separat ausgebildet sein oder materialeinheitlich und einstückig mit dem ersten Kanal und/oder dem zweiten Kanal hergestellt sein.

In dem Grundkörper kann zumindest ein Funktionselement angeordnet sein. Das Funktionselement ist dabei vorzugsweise wenigstens einem Kanal zugeordnet. Dadurch steht das Funktionselement in unmittelbarem Kontakt mit dem Temperiermedium und kann entweder direkt den Volumenstrom des Temperiermediums beeinflussen oder direkt Zustandsdaten des Temperiermediums, wie Temperatur, Volumenstrom oder Druck, erfassen. Das Funktionselement kann auch als Kühler ausgebildet sein, der in Kontakt mit dem Temperiermedium steht und die Temperatur des Temperiermediums beeinflusst. Alternativ kann das Funktionselement auch als Heizelement ausgebildet sein.

Das Funktionselement kann aus dem Grundkörper ausgeformt sein. Dies ist insbesondere dann denkbar, wenn das Funktionselement ein passives Funktionselement ist und keinerlei bewegliche Teile aufweist. Beispielsweise kann das Funktionselement ein Drosselventil bilden. Ein Drosselventil, beziehungsweise Expansionsventil, bewirkt durch eine lokale Verengung des Strömungsquerschnitts eine Verminderung des Drucks des durchfließenden Temperiermediums und bewirkt gleichzeitig eine Expansion des Temperiermediums. Das Drosselventil ist dabei als ungeregeltes Drosselventil ausgebildet und bildet eine Einschnürung des Kanals. Dadurch, dass das Drosselventil direkt aus dem Grundkörper ausgeformt ist, ist die Rohranordnung besonders kostengünstig und einfach herstellbar. Des Weiteren ist denkbar, dass das Funktionselement eine Befestigungseinrichtung zur Befestigung der Rohranordnung an einem Bauteil bildet. Hierzu kann das Funktionselement beispielsweise als Öse, Klips oder dergleichen ausgebildet sein.

Das Funktionselement kann auch als Fluidverteilungselement ausgebildet sein. Ferner ist denkbar, dass das Funktionselement als Verbindungselement oder Konnektor ausgebildet ist. Dadurch kann die Rohranordnung dazu ausgerüstet sein, mit weiteren Komponenten eines Temperierkreislaufs verbunden zu werden. Dabei kann die Rohranordnung in ein System mit einer Vielzahl von Rohren integriert werden, wobei sich mindestens zwei der Rohre kreuzen. Dabei kann das Fluidverteilungselement eine Kreuzung oder ein Y-Stück ausbilden.

Die Rohranordnung kann einen internen Wärmetauscher bilden, beispielsweise als Teil einer klimatechnischen Einheit. Der durch die Rohranordnung realisierte interne Wärmetausch ist besonders kompakt und einfach in den Klimakreislauf integrierbar.

Durch einen in den Kühlmittelkreislauf einer Klimaanlage eingebundenen internen Wärmetauscher kann der Wirkungsgrad einer Klimaanlage erhöht werden, indem Wärme des Kühlmittels von dessen Hochdruckseite auf die Niederdruckseite übertragen wird. Dabei ist das Kühlmittel auf der Hochdruckseite flüssig und auf der Niederdruckseite gasförmig, wobei das Kühlmittel auf der Hochdruckseite durch den ersten Strömungskanal und das Kühlmittel auf der Niederdruckseite durch den zweiten Strömungskanal geleitet wird. Ein Klimakreislauf einer mobilen Klimaanlage, beispielsweise eines Fahrzeugs, besteht aus einem geschlossenen Kreislauf, in welchem ein Kühlmittel zirkuliert. Das Kühlmittel wird durch einen Kompressor verdichtet und gelangt anschließend in einen Kondensator, wo das Kühlmittel verflüssigt wird. Das verflüssigte Kühlmittel wird dem internen Wärmetauscher zugeführt, in welchem das aus dem Kondensator austretende Kühlmittel Wärme an das aus dem Verdampfer austretende gasförmige Kühlmittel abgibt. Danach strömt das flüssige Kühlmittel in das Expansionsventil, in welchem der Druck des Kühlmittels herabgesetzt wird. In dem Verdampfer nimmt das Kühlmittel Wärme auf, wobei es verdampft und anschließend gasförmig ist.

Ein erfindungsgemäßes Fahrzeug umfasst eine erfindungsgemäße Rohranordnung gemäß einer der zuvor beschrieben Ausgestaltungen. Die erfindungsgemäße Rohranordnung ist besonders kompakt und dementsprechend insbesondere auch für den Einsatz in Elektrofahrzeugen geeignet, welche häufig einen besonders begrenzten Bauraum aufweisen.

Einige Ausgestaltungen der erfindungsgemäßen Rohranordnung werden nachfolgend anhand der Figuren näher erläutert. Diese zeigen, jeweils schematisch:
- Fig. 1: eine nicht erfindungsgemäße Rohranordnung mit gekreuzten Kanälen in räumlicher Darstellung;
- Fig. 2: die nicht erfindungsgemäße Rohranordnung gemäß Figur 1 in der Draufsicht;
- Fig. 3: in räumlicher Darstellung eine nicht erfindungsgemäße Rohranordnung, bei welcher die Kanäle die Orientierung wechseln;
- Fig. 4: die nicht erfindungsgemäße Rohranordnung gemäß Figur 3 in der Draufsicht und in der Seitenansicht;
- Fig. 5: eine erfindungsgemäße Rohranordnung mit mehreren gekreuzten Kanälen in räumlicher Darstellung;
- Fig. 6: die Rohranordnung erfindungsgemäße gemäß Figur 5 in der Draufsicht im Schnitt;
- Fig. 7: eine erfindungsgemäße Rohranordnung in Form einer Kreuzung in räumlicher Darstellung;
- Fig. 8: die erfindungsgemäße Rohranordnung gemäß Figur 7 in geschnittener räumlicher Darstellung;
- Fig. 9: die erfindungsgemäße Rohranordnung gemäß Figur 7 in der Draufsicht im Schnitt;
- Fig. 10: eine erfindungsgemäße Rohranordnung mit gekreuzten Kanälen in räumlicher Darstellung;
- Fig. 11: die erfindungsgemäße Rohranordnung gemäß Figur 10 in räumlicher Darstellung im Schnitt;
- Fig. 12: eine erfindungsgemäße Rohranordnung, bei welcher ein Kanal abschnittsweise innerhalb eines weiteren Kanals verläuft in räumlicher Darstellung;
- Fig. 13: die erfindungsgemäße Rohranordnung gemäß Figur 12 in räumlicher Darstellung im Schnitt.

Die Figuren zeigen eine Rohranordnung 1 für den Transport von Temperiermedium. Die Rohranordnung 1 ist aus einem mittels Blasformen hergestellten Grundkörper 2 aus polymerem Werkstoff ausgebildet. Aus dem Grundkörper 2 sind ein erster Kanal 3 und ein zweiter Kanal 4 ausgebildet, wobei der erste Kanal 3 und der zweite Kanal 4 ein Temperiermedium aufnehmen. Je nach Ausgestaltung können auch weitere Kanäle 9 vorgesehen sein. Die Rohranordnung 1 bildet häufig eine Verteilstruktur und wird dann auch als Manifold bezeichnet.

Der Grundkörper 2 ist materialeinheitlich und einstückig als Blasformteil ausgebildet und besteht aus einem thermoplastischen Kunststoff, beispielsweise aus Polypropylen oder Polyamid. Zumeist sind die Kanäle 3, 4, 9 stoffschlüssig miteinander verbunden, indem sich die Begrenzungswände der Kanäle 3, 4, 9 anliegend berühren oder indem zwischen den Kanälen 3, 4, 9 ein Steg ausgebildet ist.

Vorliegend ist die Rohranordnung 1 Bestandteil einer Temperiereinrichtung, welche eingerichtet ist, um Komponenten der Antriebseinheit von Elektrofahrzeugen zu temperieren. Hierzu gehören neben dem Akkumulator die Leistungselektronik und die Elektromotoren. Des Weiteren ist die Temperiereinrichtung dazu eingerichtet, die Ladeelektronik und die dazugehörigen Steckverbindungen und Leitungen zu kühlen, was insbesondere im Zusammenhang mit Schnellladevorgängen vorteilhaft ist. Ferner kann die Temperiereinrichtung dazu eingerichtet sein, Komponenten der übrigen Fahrzeugelektronik zu temperieren, insbesondere zu kühlen. Derartige Komponenten sind beispielsweise Sensoren und Rechner für das autonome Fahren sowie Bordcomputer.

Alternativ kann die Rohranordnung 1 einen Bestandteil eines Klimakreislaufs einer Klimaanlage bilden, wobei die Klimaanlage als mobile Klimaanlage eines Kraftfahrzeugs ausgebildet ist.

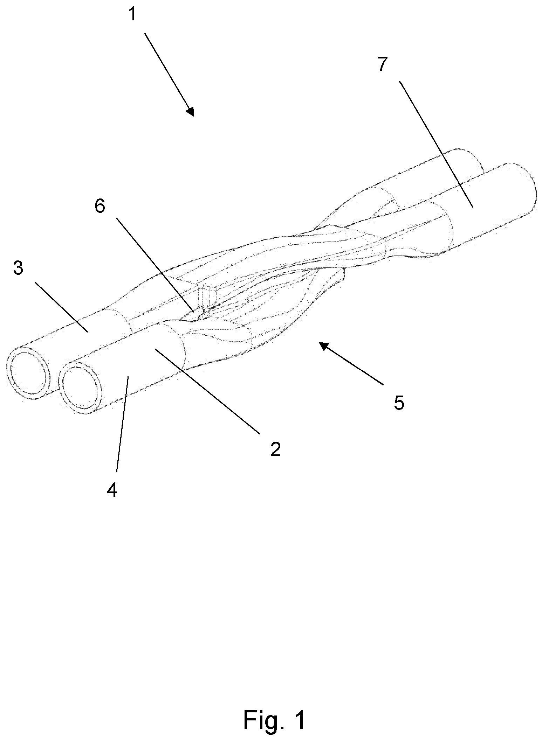

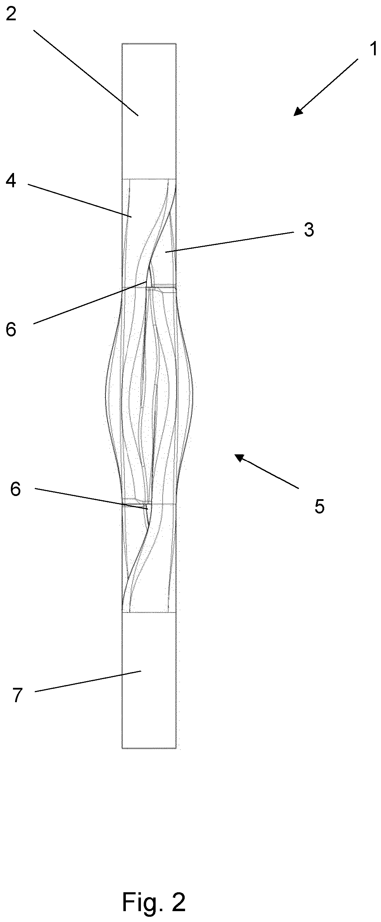

Bei der nicht erfindungsgemäßen Ausgestaltung gemäß Figur 1 und Figur 2 sind der erste Kanal 3 und der zweite Kanal 4 derart in dem Grundkörper 2 geführt, dass sich der erste Kanal 3 und der zweite Kanal 4 in einem Kreuzungsabschnitt 5 überkreuzen. In dem Kreuzungsabschnitt 5 sind der erste Kanal 3 und der zweite Kanal 4 bogenförmig in Form eines S-Bogens geführt.

In dem Kreuzungsabschnitt 5 weisen der erste Kanal 3 und der zweite Kanal 4 einen Querschnitt auf, der sich von den übrigen Querschnitten der Kanäle 3, 4 im Bereich der Rohranordnung 1 unterscheidet. In dem Kreuzungsabschnitt 5 sind der erste Kanal 3 und der zweite Kanal 4 abgeflacht. Im Querschnitt betrachtet sind der erste Kanal 3 und der zweite Kanal 4 im Kreuzungsabschnitt 5 dabei rechteckförmig ausgebildet, wobei die Eckbereiche der rechteckförmigen Kanalquerschnitte abgerundet sind. Die Abflachung des ersten Kanals 3 und des zweiten Kanals 4 erfolgt dabei derart, dass die Höhe der sich überkreuzenden Kanäle 3, 4 im Bereich des Kreuzungsabschnitts 5 der Höhe der nebeneinander geführten, einen runden Querschnitt aufweisenden, Kanäle 3, 4 in den Bereichen außerhalb des Kreuzungsabschnitts 5 entspricht. Dadurch ist die Rohranordnung 1 in Bezug auf die Höhe insgesamt weitgehend bauraumneutral.

Außerhalb des Kreuzungsabschnitts 5 sind der erste Kanal 3 und der zweite Kanal 4 stoffschlüssig miteinander verbunden, wobei sich die Kanalwände der Kanäle 3, 4 anliegend berühren. Alternativ können die Kanäle 3, 4 auch mittels Befestigungsmittel verliersicher miteinander verbunden sein oder über einen Steg miteinander verbunden sein.

In dem Kreuzungsabschnitt 5 sind zwischen den Kanälen 3, 4 Durchbrechungen 6 ausgebildet. Alternativ kann zwischen den Kanälen auch eine Begrenzungswand angeordnet sein.

In dem Grundkörper 2 ist ein Funktionselement 7 angeordnet. Dabei ist das Funktionselement 7 aus dem Grundkörper 2 materialeinheitlich und einstückig ausgeformt. Vorliegend bildet das Funktionselement 7 eine Drossel.

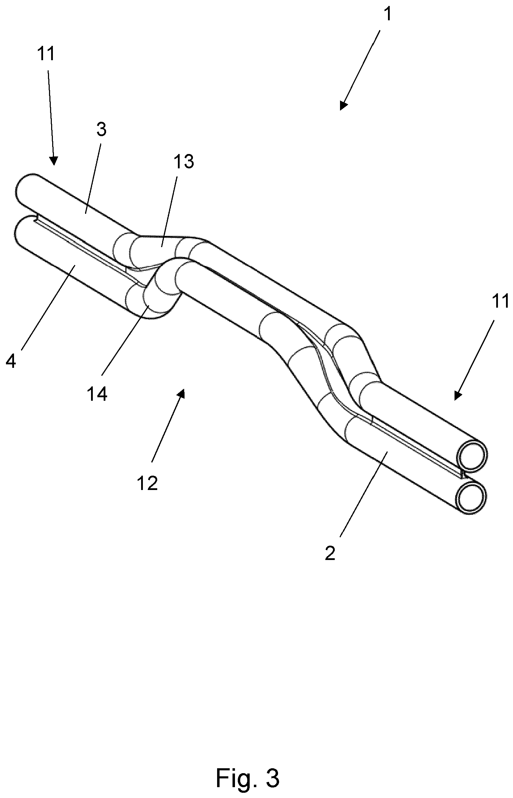

Bei der nicht erfindungsgemäßen Ausgestaltung gemäß Figur 3 weisen der erste Kanal 3 und der zweite Kanal 4 in einem ersten Abschnitt 11 zueinander eine erste Orientierung und in einem zweiten Abschnitt 12 zueinander eine zweite Orientierung auf, wobei sich die erste Orientierung von der zweiten Orientierung unterscheidet. Konkret verlaufen die Kanäle 3, 4 bei dieser Ausgestaltung in einem ersten Abschnitt 11 in einer ersten Ebene parallel zueinander und in einem zweiten Abschnitt 12 in einer zweiten Ebene parallel zueinander. In dem ersten Abschnitt 11 verlaufen die Kanäle 3, 4 in einer Vertikalebene und sind übereinander angeordnet und in dem zweiten Abschnitt 12 verlaufen die Kanäle 3, 4 in einer Horizontalebene und sind nebeneinander angeordnet. Dementsprechend verlaufen die Kanäle 3, 4 in Teilstücken parallel zueinander.

In den Übergängen zwischen den ersten und zweiten Abschnitten 11, 12 sind die Kanäle in einem dritten Abschnitt 13 und in einem vierten Abschnitt 14 bogenförmig, wobei die Orientierung der Kanäle 3, 4 in dem dritten Abschnitt 13 und in dem vierten Abschnitt 14 wechselt. Dabei sind die bogenförmigen Abschnitte 13, 14 so ausgebildet, dass die Rohranordnung 1 insgesamt U-förmig ausgebildet ist.

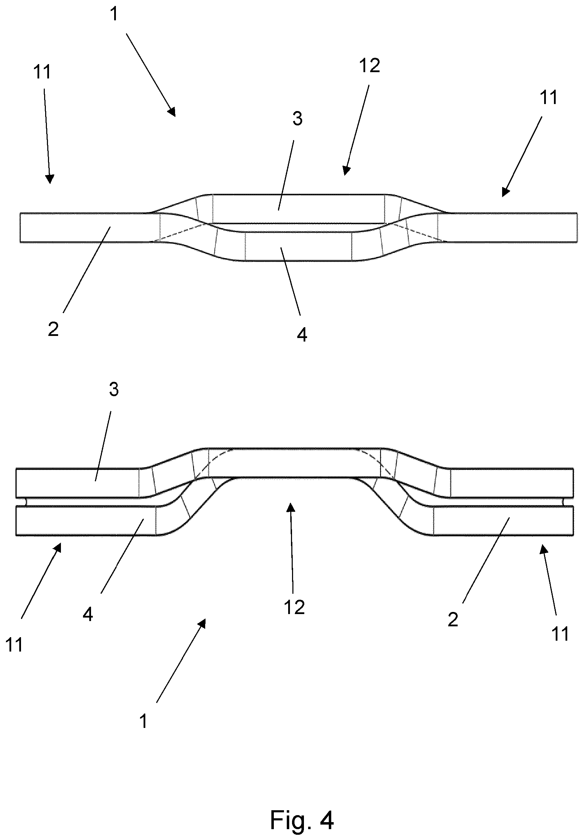

Figur 4 zeigt die in Figur 3 gezeigte nicht erfindungsgemäße Rohranordnung 1 im oberen Bereich in der Draufsicht und im unteren Bereich in der Seitenansicht.

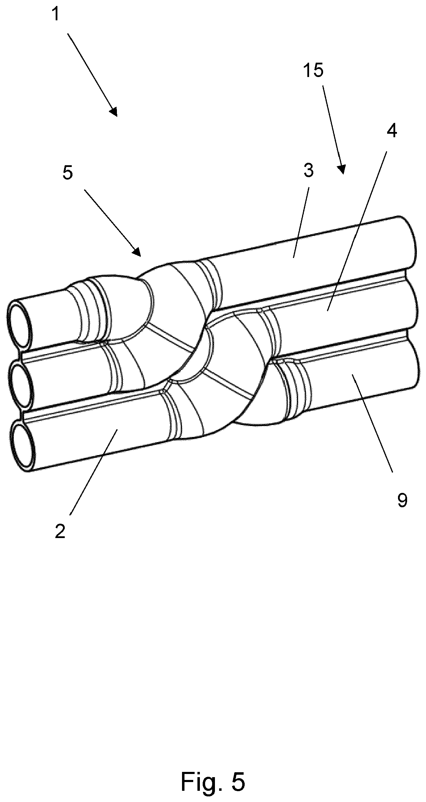

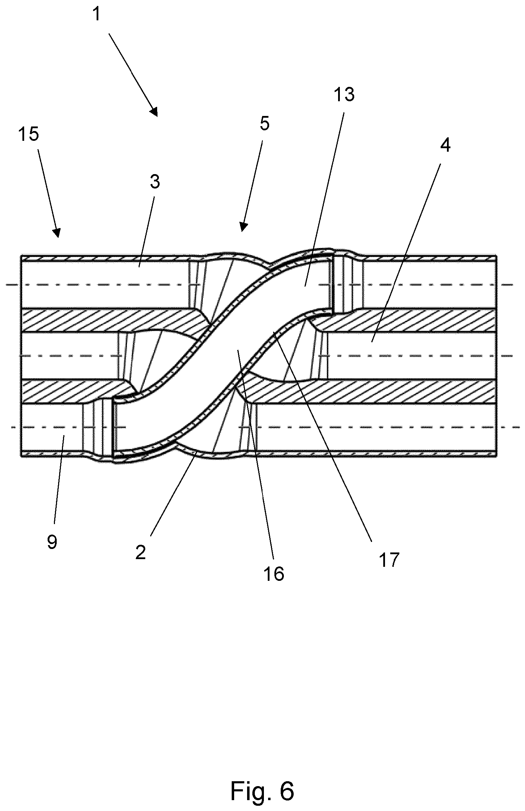

Figur 5 zeigt eine erfindungsgemäße Rohranordnung 1 mit drei Kanälen 3, 4, 9, wobei ein Kanal 9 die beiden anderen Kanäle 3, 4 in einem Kreuzungsabschnitt 5 kreuzt. Hierzu durchdringt der Kanal 9 die beiden anderen Kanäle 3, 4. In dem Kreuzungsabschnitt 5 ist dabei der Kanal 9 innerhalb der anderen Kanäle 3, 4 geführt. Damit die Fluidströme innerhalb der Kanäle 3, 4, 9 getrennt bleiben, ist ein Kanalabschnitt 16 des Kanals 9 als Einleger 17 ausgebildet. Der Einleger 17 ist ein rohrförmiges Element, durch welches das durch den Kanal 9 strömende Fluid durch den Kreuzungsabschnitt 5 transportiert wird. Der Einleger 17 ist in der Schnittansicht in Figur 6 zu erkennen. Außerhalb des Kreuzungsabschnitts 5 verlaufen die Kanäle 3, 4, 9 in Teilstücken 15 parallel. In allen Abschnitten verlaufen die Kanäle 3, 4, 9 in einer Ebene. Der Einleger 17 ist aus polymerem Werkstoff ausgebildet, es kommen alternativ aber auch metallische Werkstoffe wie Aluminium in Betracht.

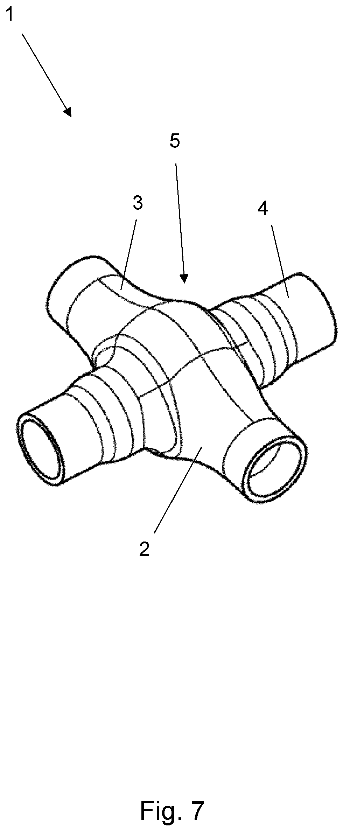

Figur 7 zeigt eine erfindungsgemäße Rohranordnung 1 mit zwei Kanälen 3, 4, wobei ein Kanal 4 den anderen Kanal 3 in einem Kreuzungsabschnitt 5 kreuzt. Die beiden Kanäle 3, 4 verlaufen unter einen Winkel zueinander, in dieser Ausgestaltung rechtwinklig, so dass die Rohranordnung 1 eine Kreuzung bildet.

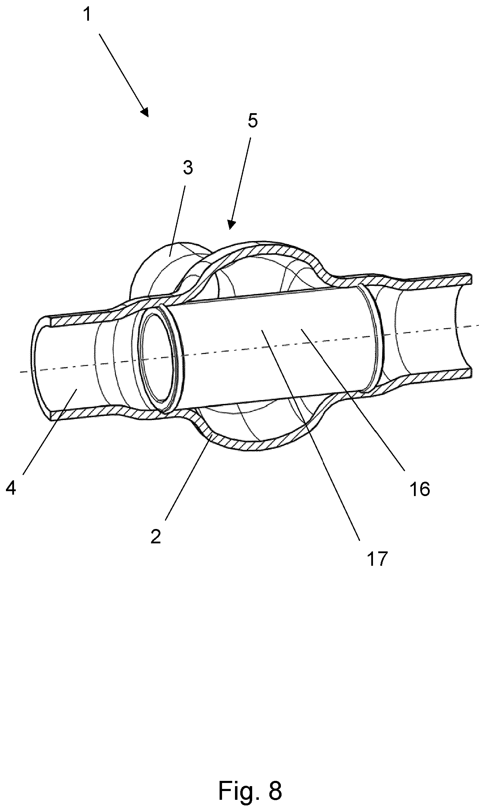

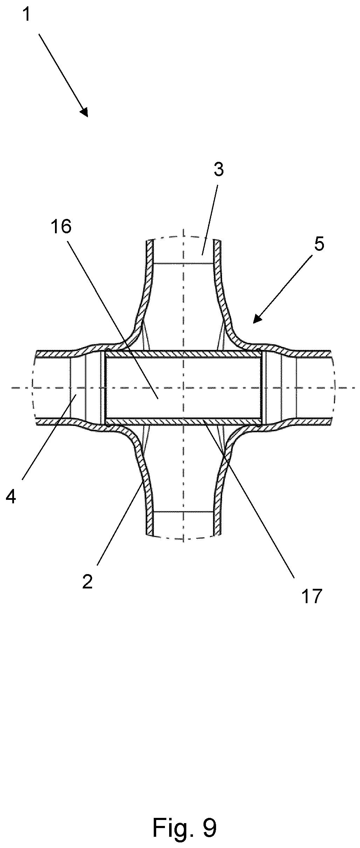

Im Kreuzungsabschnitt 5 durchdringt der Kanal 4 den anderen Kanal 3, wobei der Kanal 4 in dem Kreuzungsabschnitt 5 innerhalb des anderen Kanals 3 geführt ist. Damit die Fluidströme innerhalb der Kanäle 3, 4 getrennt bleiben, ist ein Kanalabschnitt 16 des Kanals 4 als Einleger 17 ausgebildet. Der Einleger 17 ist ein rohrförmiges Element, durch welches das durch den Kanal 4 strömende Fluid durch den Kreuzungsabschnitt 5 transportiert wird. Der Einleger 17 ist fluiddicht in die Rohranordnung 1 eingebracht, so dass kein Überströmen von Medium zwischen den Kanälen 3, 4 erfolgen kann. Der Einleger 17 ist in der Schnittansicht in den Figuren 8 und 9 zu erkennen.

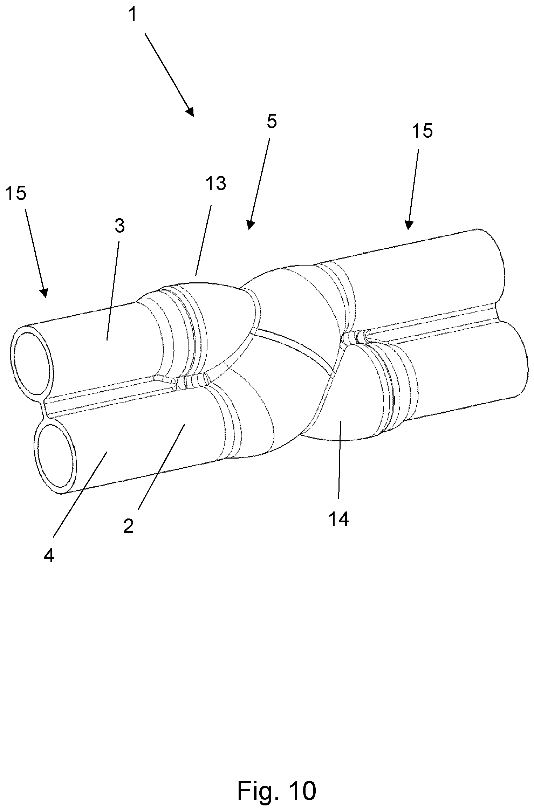

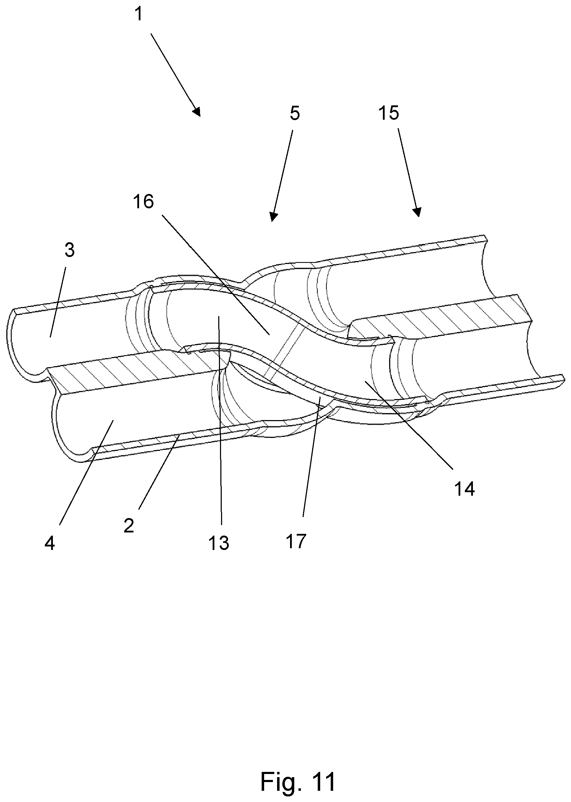

Figur 10 zeigt eine Weiterbildung der in den Figuren 7, 8 und 9 gezeigten erfindungsgemäße Rohranordnung 1. Bei der vorliegenden Ausgestaltung schließen sich an den Kreuzungsabschnitt 5 bogenförmige dritte und vierte Abschnitte 13, 14 an. Die bogenförmigen Abschnitte 13, 14 sind so ausgebildet, dass die Kanäle 3, 4 in Teilstücken 15 parallel zueinander verlaufen. Figur 11 zeigt die in Figur 10 gezeigte Rohranordnung 1 samt Einleger 17 im Schnitt.

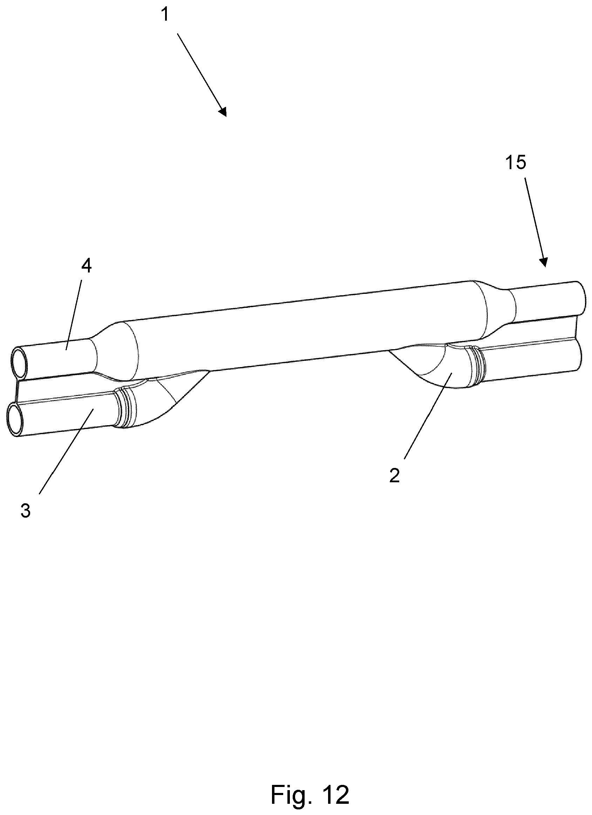

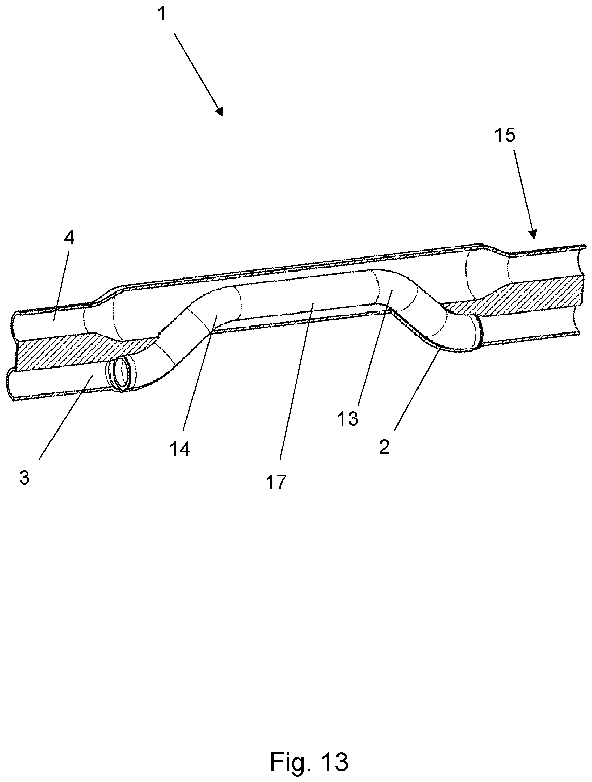

Bei der erfindungsgemäße Rohranordnung 1 gemäß Figur 12 durchdringt ein Kanal 4 den anderen Kanal 3, so dass ein Kanal 4 abschnittsweise innerhalb des anderen Kanals 3 geführt ist. Die Rohranordnung 1 bildet dabei einen internen Wärmetauscher einer klimatechnischen Einheit eines Fahrzeugs. Damit die Fluidströme innerhalb der Kanäle 3, 4 getrennt bleiben, ist ein Kanalabschnitt des Kanals 4 als Einleger 17 ausgebildet. Der Einleger 17 ist ein rohrförmiges Element, durch welches das durch den Kanal 4 strömende Fluid durch den innerhalb des anderen Kanals 3 liegenden Bereich transportiert wird. Der Einleger 17 ist in der Schnittansicht in Figur 13 zu erkennen.

## Patentansprüche

1. Rohranordnung (1) für den Transport von Temperiermedien, umfassend einen mittels Blasformen hergestellten Grundkörper (2), aus welchem zumindest ein erster Kanal (3) und ein zweiter Kanal (4) ausgebildet sind, wobei der erste Kanal (3) den zweiten Kanal (4) zumindest abschnittsweise durchdringt, **dadurch gekennzeichnet, dass** die Kanäle (3, 4, 9) einstückig und materialeinheitlich aus dem Grundkörper (2) ausgebildet sind.

2. Rohranordnung nach Anspruch 1, **dadurch gekennzeichnet, dass** der erste Kanal (3) zumindest abschnittsweise innerhalb des zweiten Kanals (4) geführt ist.

3. Rohranordnung nach Anspruch 1 oder 2, **dadurch gekennzeichnet, dass** der erste Kanal (3) den zweiten Kanal (4) kreuzt.

4. Rohranordnung nach einem der Ansprüche 1 bis 3, **dadurch gekennzeichnet, dass** aus dem Grundkörper (2) ein dritter Kanal (9) ausgebildet ist, wobei der dritte Kanal (9) den ersten Kanal (3) und/oder den zweiten Kanal (4) kreuzt.

5. Rohranordnung nach einem der Ansprüche 1 bis 4, **dadurch gekennzeichnet, dass** der erste Kanal (3) und der zweite Kanal (4) unter einem Winkel zueinander verlaufen.

6. Rohranordnung nach einem der Ansprüche 1 bis 5, **dadurch gekennzeichnet, dass** der erste Kanal (3) und der zweite Kanal (4) in zumindest einem Teilstück (11, 12, 15) parallel verlaufen.

7. Rohranordnung nach einem der Ansprüche 1 bis 6, **dadurch gekennzeichnet, dass** zumindest ein Kanalabschnitt (16) zumindest eines Kanals (3, 4, 9) als Einleger (17) ausgebildet ist.

8. Rohranordnung nach einem der Ansprüche 1 bis 7, **dadurch gekennzeichnet, dass** die Kanäle (3, 4, 9) in einem ersten Abschnitt (11) in einer ersten Ebene parallel zueinander verlaufen und in einem zweiten Abschnitt (12) in einer zweiten Ebene parallel zueinander verlaufen.

9. Rohranordnung nach einem der Ansprüche 1 bis 8, **dadurch gekennzeichnet, dass** die Kanäle (3, 4, 9) zumindest abschnittsweise miteinander verbunden sind.

10. Rohranordnung nach einem der Ansprüche 1 bis 9, **dadurch gekennzeichnet, dass** der erste Kanal (3) und/oder der zweite Kanal (4) in einem dritten Abschnitt (13) und/oder in einem vierten Abschnitt (14) bogenförmig ausgebildet sind.

11. Rohranordnung nach einem der Ansprüche 1 bis 10, wobei diese einen internen Wärmetauscher für Temperiermedien bildet.

12. Fahrzeug, umfassend eine Rohranordnung (1) nach einem der Ansprüche 1 bis 11.

## Claims

1. Pipe arrangement (1) for the transport of temperature control media, comprising a main body (2) produced by means of blow molding, from which at least a first channel (3) and a second channel (4) are formed, the first channel (3) penetrating the second channel (4) at least in portions, **characterized in that** the channels (3, 4, 9) are formed in one piece from the main body (2) and from the same material.

2. Pipe arrangement according to claim 1, **characterized in that** the first channel (3) is guided at least in portions within the second channel (4).

3. Pipe arrangement according to claim 1 or 2, **characterized in that** the first channel (3) crosses the second channel (4).

4. Pipe arrangement according to any of claims 1 to 3, **characterized in that** a third channel (9) is formed from the main body (2), the third channel (9) crossing the first channel (3) and/or the second channel (4).

5. Pipe arrangement according to any of claims 1 to 4, **characterized in that** the first channel (3) and the second channel (4) run at an angle to each other.

6. Pipe arrangement according to any of claims 1 to 5, **characterized in that** the first channel (3) and the second channel (4) run in parallel in at least one part (11, 12, 15).

7. Pipe arrangement according to any of claims 1 to 6, **characterized in that** at least one channel portion (16) of at least one channel (3, 4, 9) is formed as an insert (17).

8. Pipe arrangement according to any of claims 1 to 7, **characterized in that** the channels (3, 4, 9) run in parallel with one another in a first plane in a first portion (11) and run in parallel with one another in a second plane in a second portion (12).

9. Pipe arrangement according to any of claims 1 to 8, **characterized in that** the channels (3, 4, 9) are connected to each other at least in portions.

10. Pipe arrangement according to any of claims 1 to 9, **characterized in that** the first channel (3) and/or the second channel (4) are curved in a third portion (13) and/or in a fourth portion (14).

11. Pipe arrangement according to any of claims 1 to 10, wherein it forms an internal heat exchanger for temperature control media.

12. Vehicle comprising a pipe arrangement (1) according to any of claims 1 to 11.

## Revendications

1. Agencement de tubes (1) pour le transport de fluides de régulation de température, comprenant un corps de base (2) fabriqué par moulage par soufflage, à partir duquel sont formés au moins un premier canal (3) et un deuxième canal (4), dans lequel le premier canal (3) traverse le deuxième canal (4) au moins dans certaines sections, **caractérisé en ce que** les canaux (3, 4, 9) sont réalisés d'une seule pièce et dans le même matériau à partir du corps de base (2).

2. Agencement de tubes selon la revendication 1, **caractérisé en ce que** le premier canal (3) est guidé au moins dans certaines sections à l'intérieur du deuxième canal (4).

3. Agencement de tubes selon la revendication 1 ou 2, **caractérisé en ce que** le premier canal (3) croise le deuxième canal (4).

4. Agencement de tubes selon l'une des revendications 1 à 3,
**caractérisé en ce qu'**un troisième canal (9) est réalisé à partir du corps de base (2), dans lequel le troisième canal (9) croise le premier canal (3) et/ou le deuxième canal (4).

5. Agencement de tubes selon l'une des revendications 1 à 4,
**caractérisé en ce que** le premier canal (3) et le deuxième canal (4) s'étendent en formant un angle entre eux.

6. Agencement de tubes selon l'une des revendications 1 à 5,
**caractérisé en ce que** le premier canal (3) et le deuxième canal (4) sont parallèles dans au moins un tronçon (11, 12, 15).

7. Agencement de tubes selon l'une des revendications 1 à 6,
**caractérisé en ce qu'**au moins une section de canal (16) d'au moins un canal (3, 4, 9) est réalisée sous forme d'insert (17).

8. Agencement de tubes selon l'une des revendications 1 à 7,
**caractérisé en ce que** les canaux (3, 4, 9) s'étendent parallèlement les uns aux autres dans un premier plan dans une première section (11) et s'étendent parallèlement les uns aux autres dans un second plan dans une deuxième section (12).

9. Agencement de tubes selon l'une des revendications 1 à 8,
**caractérisé en ce que** les canaux (3, 4, 9) sont reliés entre eux au moins dans certaines sections.

10. Agencement de tubes selon l'une des revendications 1 à 9,
**caractérisé en ce que** le premier canal (3) et/ou le deuxième canal (4) sont réalisés en forme d'arc dans une troisième section (13) et/ou dans une quatrième section (14).

11. Agencement de tubes selon l'une des revendications 1 à 10, dans lequel ledit agencement de tubes forme un échangeur de chaleur interne pour des fluides de régulation de température.

12. Véhicule, comprenant un agencement de tubes (1) selon l'une des revendications 1 à 11.
